Europäisches Patentamt

European Patent Office

Office européen des brevets

(19)

(11) **EP 0 741 380 A2**

## (12) EUROPEAN PATENT APPLICATION

(43) Date of publication:
06.11.1996 Bulletin 1996/45

(51) Int. Cl.⁶: **G09G 1/16**, G09G 5/36

(21) Application number: 96106729.5

(22) Date of filing: 29.04.1996

(84) Designated Contracting States:
DE FR GB IT NL

(30) Priority: 01.05.1995 US 432347

(71) Applicant: MOTOROLA, INC.
Schaumburg, IL 60196 (US)

(72) Inventor: Barclay, Bruce Alan
Gilbert , Arizona 85234 (US)

(74) Representative: Spaulding, Sarah Jane et al
Motorola
European Intellectual Property Operations
Midpoint
Alencon Link
Basingstoke, Hampshire RG21 1PL (GB)

(54) **A display method for tiled data images**

(57) A method for displaying relatively large amounts of data representing an image has a display device (28). The display system has a processor (22), a disk (24), random access memory (RAM)(26), and the display device(28). First, data to be displayed is obtained (60). A number of tile are created (34). Each tile represents a portion of the image. Next, it is deter-
mined if a particular tile is in RAM (70). A least recently used tile is swapped out for storing the particular tile in the RAM (74), if the particular tile is not already stored in the RAM. The tile is displayed on the display device (80).

LINKED LIST IN RAM
*FIG. 5*

**Description**

Government License Rights

The U.S. Government has a paid-up license in this invention and the right in limited circumstances to require the patent owner to license others on reasonable terms as provided for by the terms of contract No. DAAB07-92C-L001 awarded by the US Army.

Background of the Invention

The present invention pertains to raster display of images and more particularly to a method for rapidly changing views of large amounts of display data.

There are many times in software applications that there is a need for raster data to be displayed on the screen. Since raster data takes a long time to display because of its nature, there is a need to speed up the display process considerably. Normally, a raster image is larger than the screen. In these cases, the raster image needs to be panned to see the entire image. To pan this image requires much memory and much time.

For example, in a process for displaying data representing a map, the viewer may wish to look at different portions of the map in rapid succession. The viewer may wish to rapidly scan a large portion of the map. Further the viewer may wish to rapidly zoom-in or zoom-out in viewing the map. This requires large amounts of data to be moved rapidly and accurately to avoid loss of visual continuity or loss of map detail.

Accordingly it would be highly desirable to provide a display method which organized the data for rapid and accurate display as a raster image.

Brief Description of the Drawing

FIG. 1 is a block diagram of a processor and display arrangement for producing maps in accordance with the present invention.

FIG. 2 is a flow chart of the actual tiling process in accordance with the present invention.

FIG. 3 is a mapping layout depicting a supermap and tiling of the supermap in accordance with the present invention.

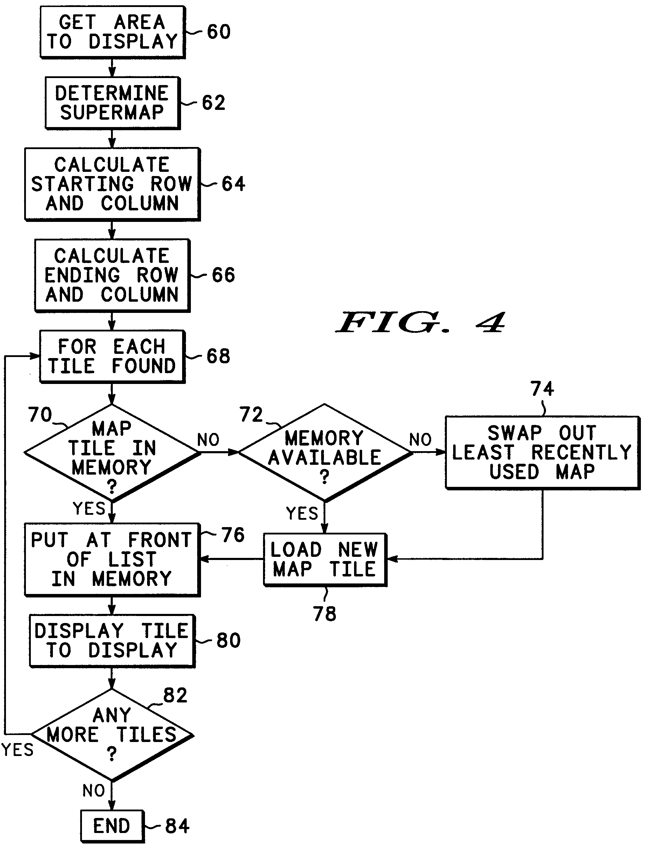

FIG. 4 is a flow chart of the actual process of finding the tile that cover a given area in accordance with the present invention.

FIG. 5 is a flow diagram that depicts the process of storing and retrieving map tiles in memory in accordance with the present invention.

Description of the Preferred Embodiment

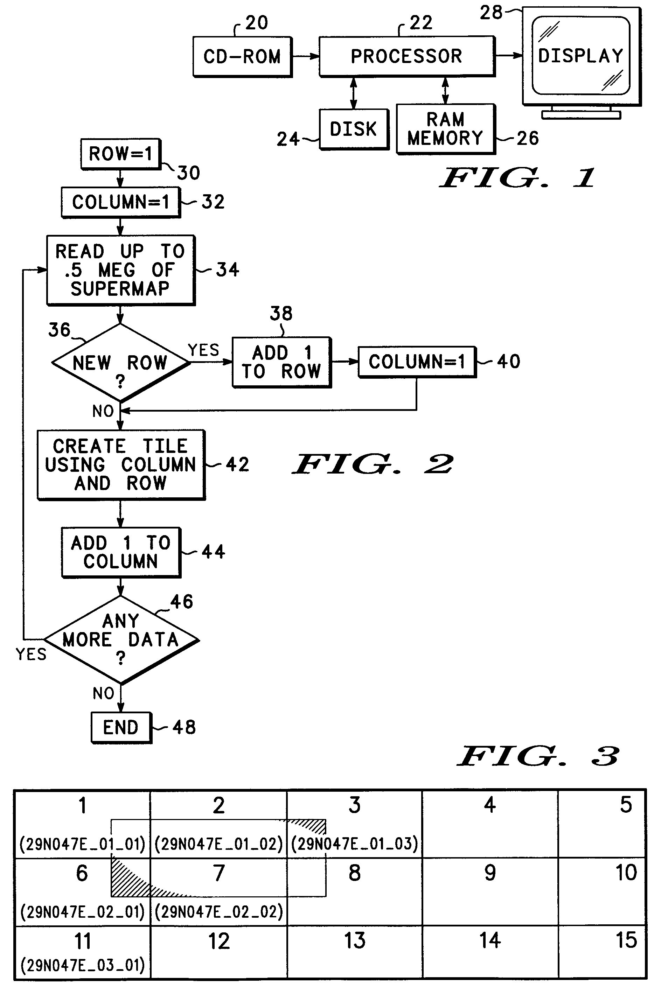

FIG. 1 illustrates a block diagram of the map display arrangement for rapid display of the map data using a tiled approached. This map data is obtained in CD-ROM format from Defense Mapping Agency (DMA). This map data can be any type of raster data. The raster data is read from CD-ROM 20 by processor 22. Processor 22 segments the data in to tiles (sections) and stores each tiles on disk 24 until the entire raster image is completed.

When a raster map is requested to be displayed, Processor 22 will check whether the tile is already in RAM (Random Access Memory) 26. If the tile is already in RAM 26, processor 22 will display the tile to display 28. If the tile is not in RAM 26, processor 22 will retrieve the tile from disk 24 and store it in RAM 26. Processor 22 will then display the tile to display 28.

For the preferred embodiment of this invention, processor 22 is implemented with a Sun Sparc board running SunOS but any Unix® based platform will work. Raster display 28 can be any raster display that can display 256 colors or more. Processor 22 is coupled to CD-ROM 20 and to raster display 28. Disk 24 and RAM 26 are included in the Sparc workstation.

**TILING PROCESS:**

Large map images are initially be partitioned into tiles. This may be an off-line or off-line process that is done once for each map image. This process need not be done in real-time, however. This technique does not limit the image size. If at a later date, an additional image was placed next to an already existing image, the process would still work. Initially, a map is obtained, as mentioned above, to process. These maps are usually produced in 1° by 1° segments. These maps have a location on the earth. These maps are too large to fit into main computer memory so the method breaks the data into 1/2 mega-word (8-bit byte) memory storage tiles. The term "tiles" is used because when laid one next to another the result resembles tiles. Each one of these tiles has a unique file name and header information telling about the particular tile. If another 1° by 1° map is loaded, it is also broken up into 1/2 mega-word tiles. In order to keep this flexible and have all the maps work, there is a structure that keeps track of all the supermaps (1° by 1° maps). This structure is an array of the following data:

| Name | Description |
|---|---|
| sm_min_long | This is the minimum longitude of the entire supermap. Minimum is defined as the Northwest corner. |
| sm_min_lat | This is the minimum latitude of the entire supermap. Minimum is defined as the Northwest corner. |
| sm_max_long | This is the maximum longitude of the entire supermap. Maximum is defined as the Southeast corner. |
| sm_max_lat | This is the maximum latitude of the entire supermap. Maximum is defined as the Southeast corner. |
| Pixels_2Pi_long | Each pixel represents some distance. This value represents how many pixels it would take to cover $360^\circ$ in the longitude direction. |
| Pixels_2Pi_lat | Each pixel represents some distance. This value represents how many pixels it would take to cover $360^\circ$ in the latitude direction. |
| Image_name | This is the actual first 8 characters of the file name. An example would be "29N047E" (29 North Latitude and 47 East longitude). |

Table 1 - Supermap header

For each supermap, there will be one of the above structures. This allows us to find the correct tiles. Each one of the tiles has the following information in it:

| Name | Description |
|------|-------------|
| File_size | The tiles are usually 1/2 meg tiles. Since the images that we process usually don't break up evenly, there needs to be a file size. See figure 1 and compare tile 1 with tile 15. |
| Pixels_wide | This is the number of pixels in the width of the tile. |
| Pixels_high | This is the number of pixels in the height of the tile. |
| Minimum_longitude | This is the minimum longitude of the map tile. Minimum is defined as the Northwest corner. |
| Minimum_Latitude | This is the minimum latitude of the map tile. Minimum is defined as the Northwest corner. |
| Maximum_longitude | This is the maximum longitude of the map tile. Maximum is defined as the Southeast corner. |
| Maximum_Latitude | This is the maximum latitude of the map tile. Maximum is defined as the Southeast corner. |
| Pixels_2Pi_long | Each pixel represents some distance. This value represents how many pixels it would take to cover $360°$ in the longitude direction. |
| Pixels_2Pi_lat | Each pixel represents some distance. This value represents how many pixels it would take to cover $360°$ in the latitude direction. |
| Data | This is the data in the image. This can be up to 1/2 meg of data. |

**Table 2 - Tile header**

## CREATING TILES FROM A MAP

FIG. 2 is the flow chart for tiling of the supermap into tiles and storing the tiles on disk. Processor 22 is reading the digital map data from CD-ROM 20. This flow is performed by processor 22. Processor 22 takes a large image and breaks it up into tiles and stores the tiles on disk 24. These tiles are arranged by row and column.

A row counter is initailized to 1, block 30. A column 1 is initialized to 1, block 32. The process then goes into a loop reading all the data in the supermap, block 34. The tiling process checks to see if it is at the end of the row, block 36. If it is, add 1 to the row, block 38 and reset column to 1, block 40. Then a filename is created for the tile, block 42. This filename includes of a latitude/longitude position and a row/column ASCII name. Add one to the column, block 44. Check to see if there is any more data to read, block 46. If there is, go back to block 36 and read another tile, otherwise stop, block 48.

FIG. 3 illustrates the way the tiles are partitioned. The outside border (heavy line) represents the supermap. In this example, the supermap is partitioned into 15 tiles. All tiles are 1/2 meg except for 5, and 10-15. The name of the supermap is "29N047E". Each tile uses the "29N047E" and adds a row and a column. This gives the tile a unique name. At this time, all tile images are in tiles on the disk with headers.

## MAP FINDING PROCESS

This is a critical process because this is how the tiles are found depending on the users view. The user who desires to view the image will pan through the image. The user will pass the area that he/she is viewing and the tile viewing process performs as follows.

Processor 22 will receive information in Latitude/longitude concerning an area to display, block 60. From this area, processor 22 will determine which supermap contains the tiles to display, block 62. Processor 22 now needs to find the tiles that will cover the area so processor 22 calculates the starting row and column, block 64. This calculation is shown below.

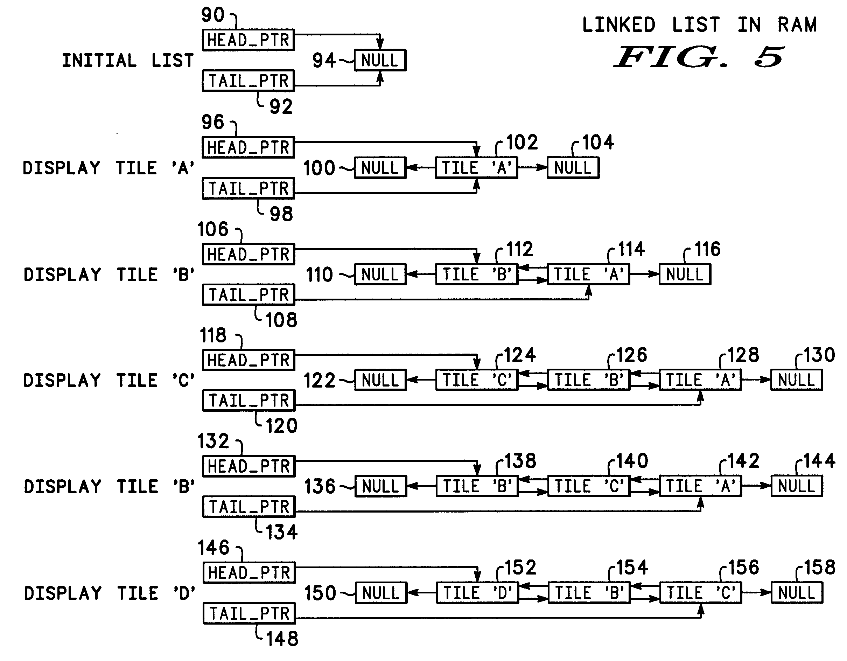

Processor 22 then calculates the ending row and column, block 66. This gives a range of tiles to process. Processor 22 finds each tile, block 68. Processor 22 checks to see if the tile is already in RAM 26 (See FIG. 5 for more information on storage in RAM), block 70. If the tile is not in RAM 26, then processor 22 checks to see if there is available memory in RAM 26, block 72. If not, processor 22 swaps out the least recently used tile, block 74. If there is available memory, processor 22 loads the new map tile from disk 24, block 78. The newly loaded tile is then put at the front of the linked list (most recently used tile), block 76. The tile is then taken from the linked list in RAM 26 and displayed to display 28, block 80. Processor 22 checks to see if there are any more tiles to display, block 82. If there are, then the above process is repeated for the next tile beginning at block 68. If not, the process is ended, block 84.

The formulas are as follows:

First, the number of pixels in one degree latitude and longitude is calculated. This is important because it is necessary to know how much each pixel takes represents the earth.

$$b = \frac{pixels\_2PI\_lat}{2^*\pi}$$

$$a = \frac{pixels\_2PI\_long}{2^*\pi}$$

Next, some interim calculations are performed. The variables with the '*new*' in front of the name are the area that the raster map needs to display. This display will change with each new requested area. This display will change when the user views a different part of the raster map.

$$row\_start = (sm\_max\_lat - new\_max\_lat)^*b$$

$$column\_start = (new\_min\_long - sm\_min\_long)^*a$$

$$row\_end = (sm\_max\_lat - new\_min\_lat)^*b$$

$$column\_end = (new\_max\_long - sm\_min\_long)^*a$$

From the above formulas, the tiled maps to be loaded from the database can be determined. This process determines the number of tiled maps also.

$$start\_row\_file = \left(\frac{row\_start}{1024}\right) + 1$$

$$start\_column\_file = \left(\frac{column\_start}{1024}\right) + 1$$

$$end\_row\_file = \left(\frac{row\_end}{1024}\right) + 1$$

$$end\_column\_file = \left(\frac{column\_end}{1024}\right) + 1$$

At this point, the identities of the tiles that need to be loaded to display the desired area is known. For example, the variables were set as follows:

$$start\_row\_file = 1$$

$$start\_column\_file = 1$$

$$end\_row\_file = 2$$

$$end\_column\_file = 3$$

then the following maps would need to be loaded (assuming 29N047E):

| 29N047E _01_01 | 29N047E_ 01_02 | 29N047E_ 01_03 |
|---|---|---|
| 29N047E _02_01 | 29N047E_ 02_02 | 29N047E_ 02_03 |

## Least Recently Used (LRU) Display Process

FIG. 5 shows the tiles being added to the linked list in RAM 26. Before there are any tiles in memory, the linked list is empty. Head_ptr, block 90 and Tail_ptr, block 92 both point to NULL, block 94.

When tile 'A' is displayed, it is not in the linked list so, tile 'A' needs to be put in there. At this point, the Head_ptr, block 96 and Tail_ptr, block 98 both point to tile 'A', block 102. Since tile 'A', block 102 is the only tile in the list, its previous pointer points to NULL, block 100 and next pointer points to NULL, block 104.

Next, when tile 'B' is displayed, it is also not in the linked list so tile 'B' needs to be put in there. Since tile 'B' is the newest one (most recently used), it is put at the front of the list, block 112. The Head_ptr, block 106, points to tile 'B'. Now that there are two tiles in the list, the Tail_ptr, block 108, points to the last in the list (least recently used), tile 'A', block 114. There are no tiles before tile 'B' so tile 'B' points to NULL, block 110. There are no tiles after tile 'A' so tile 'A' points to NULL, block 116. There is also a link from tiles 'A' to 'B', block 112, and from tiles 'B' to 'A', block 114.

When tile 'C' is displayed, it is also not in the linked list, so tile 'C' needs to be put in there. Since tile 'C' is the newest one (most recently used), tile 'C' is put at the front of the list, block 124. The Head_ptr, block 118, points to tile 'C'. Now that there are three in the list, the Tail_ptr, block 120, points to the last in the list (least recently used), tile 'A', block 128. There are no tiles before tile 'C' so tile 'C' points to NULL, block 122. There are no tiles after tile 'A', so tile 'A' points to NULL, block 130.

Blocks 124, 126, and 128 are all doubly linked to each other so the process can traverse the list. For this example, it is assumed that the list can only handle 3 elements so the list is now full.

When tile 'B' is again requested to be displayed, tile 'B' is already in the linked list so it does not need to be put in there again. Since tile 'B' is the newest tile (most recently used), tile 'B' is taken out of where it was, block 126 and put at the front of the list, block 138. The Head_ptr, block 132, points to tile 'B'. Tail_ptr, block 134, points to the last in the list (least recently used), tile 'A', block 142. There are no tiles before tile 'B' so tile 'B' points to NULL, block 136. There are no tiles after tile 'A' so tile 'A' points to NULL, block 144.

Blocks 138, 140, and 142 are all doubly linked to each other so the process can traverse the list. Tile 'A' is still the last in the list, block 142. Tile 'B' is the first in the list, block 138.

When tile 'D' is displayed, tile 'D' is not in the linked list so it needs to be inserted. This presents a problem though. The linked list is already full. Because the list is full, the LRU tile, tile 'A', block 142 needs to be extracted from the list. This will allow adding tile 'D', since tile 'D' is the newest one (most recently used), it is put at the front of the list, block 152. The Head_ptr, block 146, points to tile 'D', block 152. The Tail_ptr, block 148, points to the last tile in the list (least recently used), tile 'D', block 156. There are no tiles before tile 'D' so tile 'D' points to NULL, block 150. There are no tiles after tile 'C' so tile 'C' points to NULL, block 158.

Blocks 152, 154, and 156 are all doubly linked to each other so the process can traverse the list. If any new tiles were displayed, tile 'C', block 156 would be the first to be taken out of the linked list because tile 'C' is the least recently used.

This process will give at least the area requested. Most of the time, the area requested will be less than all the tiles (See FIG. 3). For each one of the tiles, there is the header (Table 2) that contains information on how to clip the map. The map will be displayed in the shaded area of FIG. 3.

The present invention rapidly and efficiently positions the map data to be displayed according to the tile element which is the least recently used tile. In this way the display process finds the proper tile without going through a tree like process. After the process operates, the tile can be directly extracted from disk. As a result the process can display these maps in less than one second. This helps keep visual continuity of the user.

Although the preferred embodiment of the invention has been illustrated, and that form described in detail, it will be readily apparent to those skilled in the art that various modifications may be made therein without departing from the spirit of the invention or from the scope of the appended claims.

## Claims

1. A method for displaying large amounts of data representing an image on a display device (28) by a display system, the display system including a processor (22), a disk (24), a random access memory (RAM) (26), and the display device (28), the method for displaying comprising the steps of:

> obtaining (60) the data representing the image from the disk;
> creating (62) a plurality of tiles, each tile representing a portion of the image;
> determining (70) whether a particular tile is already stored in the RAM,
> swapping out (74) of the RAM a least recently used tile for storing the particular tile in the RAM, if the particular tile is not already stored in the RAM; and
> displaying (80) on the display device the particular tile.

2. A method for displaying large amounts of data as claimed in claim 1, wherein the step of determining whether a particular tile is already stored in the RAM includes the step of determining (72) whether there is available memory in the RAM to store the particular tile.

3. A method for displaying large amounts of data as claimed in claim 2, wherein there is further included the steps of:

loading (78) the particular tile in the RAM; and
inhibiting (72) the step of swapping out, if there is available memory in the RAM.

4. A method for displaying large amounts of data as claimed in claim 3, wherein there is further included a step of indicating (76) in link list that the particular tile is a most recently loaded tile in the RAM.

5. A method for displaying large amounts of data as claimed in claim 4, wherein the step of indicating in a link list includes the steps of:

linking (96) in the link list the most recently loaded tile in the RAM to a next most recently loaded tile in the RAM; and
indicating (98) in the link list the least recently used tile.

6. A method for displaying large amounts of data as claimed in claim 5, wherein there is further include the steps of:

determining (82) whether any more tiles are to be loading in the RAM; and
obtaining (68) a new tile from the disk to loaded in the RAM.

7. A method for displaying large amounts of data as claimed in claim 1, wherein the step of creating a plurality of tiles, each tile representing (1,2,3,6,7,8) a portion of the image includes the step of segmenting (34) the image of the plurality of tiles into blocks of a predetermined size in an off-line process by the processor.

8. A method for displaying large amounts of data as claimed in claim 7, wherein the step of segmenting the image of the plurality of tiles into blocks of a predetermined size in an off-line process by the processor includes the step of segmenting (34) the image of the plurality of tiles into blocks of approximately one/half mega-words in length in an off-line process by the processor.

9. A method for displaying large amounts of data as claimed in claim 1, wherein the step of creating a plurality of tiles, each tile representing a portion of the image includes the step of segmenting (34) the image of the plurality of tiles into blocks of a predetermined size in an on-line process by the processor.

10. A method for displaying large amounts of data as claimed in claim 7, wherein the step of segmenting the image of the plurality of tiles into blocks of a predetermined size in an off-line process by the processor includes the step of segmenting (34) the image of the plurality of tiles into blocks of approximately one/half mega-words in length in an on-line process by the processor.

CD-ROM → PROCESSOR → DISPLAY

20      22      28

24 → DISK     RAM MEMORY ← 26

*FIG. 1*

ROW=1 — 30

COLUMN=1 — 32

READ UP TO .5 MEG OF SUPERMAP — 34

36 — NEW ROW ? — YES → ADD 1 TO ROW → COLUMN=1 — 40

38

NO

CREATE TILE USING COLUMN AND ROW — 42

*FIG. 2*

ADD 1 TO COLUMN — 44

ANY MORE DATA ? — 46

YES

NO

END — 48

*FIG. 3*

| 1 | 2 | 3 | 4 | 5 |
|---|---|---|---|---|
| (29N047E_01_01) | (29N047E_01_02) | (29N047E_01_03) | | |
| 6 | 7 | 8 | 9 | 10 |
| (29N047E_02_01) | (29N047E_02_02) | | | |
| 11 | 12 | 13 | 14 | 15 |
| (29N047E_03_01) | | | | |

*FIG. 4*

GET AREA TO DISPLAY — 60

DETERMINE SUPERMAP — 62

CALCULATE STARTING ROW AND COLUMN — 64

CALCULATE ENDING ROW AND COLUMN — 66

FOR EACH TILE FOUND — 68

70 — MAP TILE IN MEMORY ?

72 — MEMORY AVAILABLE ?

74 — SWAP OUT LEAST RECENTLY USED MAP

NO / YES

PUT AT FRONT OF LIST IN MEMORY — 76

LOAD NEW MAP TILE — 78

DISPLAY TILE TO DISPLAY — 80

82 — ANY MORE TILES ?

YES / NO

END — 84

# FIG. 5

INITIAL LIST

90
HEAD_PTR
94 — NULL
TAIL_PTR
92

96
HEAD_PTR
DISPLAY TILE 'A'
100 — NULL ← TILE 'A' → NULL  (102, 104)
TAIL_PTR
98

106
HEAD_PTR
DISPLAY TILE 'B'
110 — NULL ← TILE 'B' ← TILE 'A' → NULL  (112, 114, 116)
TAIL_PTR
108

118
HEAD_PTR
DISPLAY TILE 'C'
122 — NULL ← TILE 'C' ← TILE 'B' ← TILE 'A' → NULL  (124, 126, 128, 130)
TAIL_PTR
120

132
HEAD_PTR
DISPLAY TILE 'B'
136 — NULL ← TILE 'B' ← TILE 'C' ← TILE 'A' → NULL  (138, 140, 142, 144)
TAIL_PTR
134

146
HEAD_PTR
DISPLAY TILE 'D'
150 — NULL ← TILE 'D' ← TILE 'B' ← TILE 'C' → NULL  (152, 154, 156, 158)
TAIL_PTR
148

EP 0 741 380 A2